# EUROPÄISCHE PATENTSCHRIFT

(11) **EP 1 724 131 B1**
(45) Veröffentlichungstag und Bekanntmachung des Hinweises auf die Patenterteilung: **05.05.2010**
(21) Anmeldenummer: 06113865.7
(22) Anmeldetag: 12.05.2006
(51) Int. Cl.: B60G 17/015, B60G 17/052, B62D 33/06

(54) **Vorrichtung und Verfahren zur Federung einer Fahrzeugkabine mittels Luftfeder und Zusatzvolumina**
Device and method for suspending a vehicle cabin using air spring with additional air chamber
Dispositif et procédé pour la suspension d'une cabine de véhicule utilisant un ressort pneumatique avec chambre d'air additionnelle

(30) Priorität: 13.05.2005 DE 102005023090
(43) Veröffentlichungstag der Anmeldung: 22.11.2006
(73) Patentinhaber: GRAMMER AG, 92224 Amberg (DE)
(72) Erfinder: Haller, Erwin, 92262, Birgland (DE)
(74) Vertreter: Hannke, Christian

(56) Entgegenhaltungen:
- EP-A- 0 089 794
- EP-A- 1 464 866
- WO-A-89/12766
- DE-U1- 20 214 583
- US-A- 3 966 223
- US-A- 5 217 210
- US-A- 5 255 935
- US-A1- 2001 044 685
- US-A1- 2003 015 830
- US-A1- 2004 227 050
- PERRUCHOT M: "LES SUSPENSIONS. ÖLES SUSPENSIONS PNEUMATIQUES, APPLICATIONS SUR VEHICULES INDUSTRIELS" 1. Mai 1991 (1991-05-01), REVUE TECHNIQUE DIESEL, ETAI, BOULOGNE BILLANCOURT, FR, PAGE(S) XIII-XIV,XVI , XP000209803 ISSN: 0037-2579 * das ganze Dokument *

## Beschreibung

Die Erfindung betrifft eine Vorrichtung sowie ein Verfahren zur Federung einer Fahrzeugkabine mittels Zusatzvolumina, insbesondere einer Nutzfahrzeugkabine für Nutzfahrzeuge mit mindestens einer zwischen der Nutzfahrzeugkabine und einem Grundgestell angeordneten Luftfeder zur Federung der Nutzfahrzeugkabine und einer Steuereinrichtung zur Steuerung der Zu- und Abführung mindestens eines Zusatzvolumens zu oder von der Luftfeder, gemäß den Oberbegriffen der Patentansprüche 1 und 8. Eine derartige Vorrichtung bzw. derartiges Verfahren zur Federung einer Fahrzeugkabine ist aus der EP-A-0 089 794 bekannt.

Federungsvorrichtungen für Fahrzeugkabinen sind insbesondere für eine Dämpfung einer Niveauauslenkung der Fahrzeugkabine beim Überfahren von unebenen Fahrbahnoberflächen, wie Schlaglöchern, bekannt. Aus dem Bereich der Fahrzeugsitze zeigt EP 1 188 608 A1 ein aktives Dämpfungssystem für gefederte Fahrzeugsitze, bei dem zwischen einem Sitzteil und einem mit dem Fahrzeug verbundenen Unterteil neben einer mechanischen flexiblen Verbindungseinrichtung eine pneumatische Entlastungsvorrichtung und ein hydraulisches Stellglied angeordnet sind. Sowohl die pneumatische Entlastungsvorrichtung als auch das hydraulische Stellglied werden als Funktion eines Sitzfehlersignals, welches beispielsweise durch eine ruckartige Niveauverstellung des Sitzteils erzeugt wird, durch eine Steuereinrichtung gesteuert.

Derartige hydraulische Stellglieder erfordern eine Verbindung mit dem Bordnetz des Fahrzeuges, insbesondere eines Nutzfahrzeuges, wie einem Traktor. Eine derartige Verbindung hat zur Folge, dass die Aktion der aktiven Dämpfung des Fahrzeugsitzes von der Funktion des Bordnetzes und insbesondere dessen Parameter abhängig ist, so dass eine Abstimmung der Parameter des Dämpfungssystems auf die Parameter des Bordnetzes und damit eine Anpassung des Systems an das jeweilige Nutzfahrzeug erforderlich ist. Zudem sind derartige Federungsvorrichtungen insofern einfach aufgebaut, als dass das hydraulische Stellglied beim Empfang eines Positionsfehlersignales bezüglich des Fahrzeugsitzes, der mit dem Gewicht eines Fahrers beaufschlagt wird, Luft mittels eines Kompressors zugeführt bekommt und hierdurch ein vergrößertes Luftvolumen zur ausreichenden Dämpfung des Fahrzeugsitzes geschaffen wird. Derartige Federungsvorrichtungen weisen entlang ihrer Niveauverstellung keinen Komfortbereich auf, der sich über einen längeren Abschnitt des Niveauverstellungsweges erstreckt und somit eine gleichmäßige Federung innerhalb dieses Niveauverstellungsbereiches mit den gleichen Rückstellkräften darstellt.

Die Druckschrift WO-A-89/12766 offenbart eine Federungsvorrichtung für Kraftfahrzeuge mit einer zwischen einer gefederten Masse (z.B. Fahrzeugaufbau) und einem Fahrzeugrad angeordneten Gasfeder, die eine erste flexible Gasfederkammer und eine zweite Starre Zusatzvolumenkammer aufwiest. Die Übertragung zwischen beiden Kammern geschieht durch ein schnell-öffnendes bzw. -schließendes Ventil, welches seinerseits mit einer Detektionsvorrichtung verbunden ist. Bei dieser Federungsvorrichtung wird mittels eine Steuereinrichtung bei vorbestimmten Beschleunigungs- bzw, Hubstellungswerten, die ein erstes Kriterium erfüllen, während einer Ausstellfederbewegung, das Ventil geschlossen, sodaß das durch die starre Kammer gebildete Zusatzvolumen abgeschaltet wird, wobei bei Erreichen des Umkehrpunktes zwischen Ausstelluns Rückstellfederbewegung das Ventil gemäß einem zweiten Kriterium wieder geöffnet wird, sodaß das durch die starre Kammer gebildete Zusatzvolumen wieder zugeschaltet wird, wobei ein Druckausgleich der zwei Gaskammern erfolgt, der zu einer Disspation der Energie führt. Danach während der Rückstellfederbewegung wird das Ventil gemäß einem dritten Kriterium wieder geschlossen und danach gemäß einem vierten Kriterium wieder geöffnet. Hierdurch wird eine Nachschwingung der Federungsvorrichtung verringert.

EP-A-0 482 323 (bzw. US-A-5 217 210) offenbart ebenfalls eine Federungsvorrichtung für Kraftfahrzeuge mit einer zwischen einer gefederten Masse (z.B. Fahrzeugaufbau) und einer ungefederten Masse (z.B. Fahrzeugachse) angeordneten Luftfeder, und einer Steuereinrichtung zur Steuerung der Zu- und Abführung eines durch eine weitere Kammer gebildeten Zusatzvolumen zu oder von der Luftfeder mittels einer Ventilanordnung, welche mittels der rechnergestützten Steuerung, die aus den Signalen eines zwischen gefederter und ungefederter Masse angeordneten Hubgebers neben der jeweiligen Hubstellung auch die Hubgeschwindigkeit bzw. -richtung ermittelt und wobei jeweils bei Hubrichtungsumkehr zwischen Offen- und Schließlage umstellbar ist. Wenn der Fahrzeugaufbau unerwünschte Bewegungen ausführt, insbesondere im Bereich der Aufbauresonanzfrequenz, so wird Ventilanordnung in der Druckstufe des Federaggregates geschlossen, wobei das Zusatzvolumenkammer abgeschaltet wird. Dies hat zur Folge, dass sich mit zunehmender Aufwärtsbewegung in der Luftfederkammer ein stark ansteigender Druck einstellt. Sobald nun die Aufwärtsbewegung des Rades relativ zum Fahrzeugaufbau ihren Umkehrpunkt erreicht, wird die Ventilanordnung geöffnet, so dass die Zusatzvolumenkammer wieder zugeschaltet wird, wobei eine gewisse Druckentlastung der Luftfederkammer in die Zusatzvolumenkammer auftritt, d. h. die in der vorangegangenen Druckstufe des Federaggregates aufgrund der Absperrung der Luftfederkammer gegenüber der Zusatzvolumenkammer in der Luftfederammer erfolgte starke Druckerhöhung wird deutlich vermindert. Dies führt zu deutlich verminderten Rückstellkräften des Federaggregates.

Eine weitere Luftfedervonichtung ist in US 5,255,935 offenbart, wobei eine Vielzahl von Federkonstanten durch die Anordnung von Nebenkammern bereitgestellt wird und damit ein verbessertes Ansprechverhalten der Luftfederung erzielt wird.

Eine Luftfedervorrichtung einschließlich zugehöriger Kraft-Weg-Profile ist in US 2004/227050 A1 gezeigt.

EP 0 482 323 A1 offenbart ein federndes Abstützsystem für Kraftfahrtzeuge mit zwischen einer gefederten Masse und einer ungefederten Masse angeordneten pneumatischen bzw. hydropneumatischen Federelementen sowie eine Ventilanordnung, welche mittels einer rechnergestützten Steuerung, die aus den Signalen eines zwischen gefederter und ungefederter Masse angeordneten Hubgebers neben der jeweiligen Hubstellung auch die Hubgeschwindigkeit bzw. -richtung ermittelt und wobei jeweils bei Hubrichtungsumkehr zwischen Offen- und Schließlage umstellbar ist.

Zudem sind Luftfedern bekannt, die eine linear verlaufende Kraft-Weg-Luftfederkennlinie aufweisen, deren Steigung in Abhängigkeit von der Ausgestaltung der Luftfeder und einem angewandten Zusatzvolumen unterschiedlich ist. In der Regel werden bei derartigen Luftfedern konstant gehaltene Zusatzvolumina verwendet, die als eigentliches Luftvolumen der Luftfeder mit der ein- und ausfahrenden Luftfeder verbunden sind.

Derartige konstant gehaltene Zusatzvolumina haben zur Folge, dass, wenn die Luftfeder mit einer Kraft-Weg-Luftfederkennlinie mit geringer Steigung eingestellt ist, ein Zurückschwingen der Nutzfahrzeugkabine in eine mittlere Position der Kraft-Weg-Luftfederkennlinie deshalb nicht möglich ist, da Reibungskräfte innerhalb der gesamten Federungsvorrichtung größer sind als eine Rückstellkraft innerhalb der Kraft-Weg-Luftfederkennlinie.

Andererseits wird bei einer Ausbildung der Federungsvorrichtung derart, dass die Rückstellkraft größter ist- also eine größere Steigung der Luftfederkennlinie eingestellt wird - eine vergleichsweise harte Dämpfung sowohl im mittleren Hubbereich als auch in den Hubendbereichen der Luftfeder erreicht.

Zudem wird bei der Anwendung einer Luftfeder in einem Luftfederkennlinienbereich mit geringer Steigung - dem sogenannten Komfortbereich -, welcher die Zuschaltung eines großen Zusatzvolumens erfordert, ein Erreichen der Endanschläge in Hubendbereichen der Luftfeder bei starken Ein- und Ausfahrbewegungen aufgrund einer starken Unebenheit wahrscheinlich, wodurch ein verminderter Fahrkomfort für den Benutzer des Fahrzeugs entsteht.

Die Einstellung eines Komfortbereichs wird bei Luftfedern für Fahrzeugkabinen generell aufgrund besserer Übertragungswerte und daraus resultierendem höheren Komfort angestrebt.

Ein derartiger Komfortbereich der Luftfederkennlinie wird werksseitig bisher derart eingestellt, dass er universell für verschiedene Fahrbahnen und Untergründe mit unterschiedlich starken Unebenheiten einsetzbar ist. Da insbesondere bei Traktoren, welche sich sowohl auf der geteerten Fahrbahn als auch auf einem Feldweg oder sogar auf einem Acker fortbewegen, sehr unterschiedliche Anforderungen an die Optimierung der Federungsvorrichtung bzw. eines Federungssystems der Traktorenfahrzeugkabine gestellt sind, kann ein anfangs eingestellter universeller Komfortbereich lediglich ein Kompromiss für eine effektive Federung der Fahrzeugkabine in unterschiedlichem Gelände sein.

Demzufolge liegt der vorliegenden Erfindung die Aufgabe zugrunde, eine Federungsvorrichtung für eine Fahrzeugkabine zur Verfügung zu stellen, die einen erhöhten Fahrkomfort für einen Benutzer bei Benutzung der Fahrzeugkabine in einem Komfortbereich, der durch eine Kraft-Weg-Luftfederkennlinie mit sehr geringer oder keiner Steigung wiedergegeben wird, und in Hubendbereichen, die außerhalb des Komfortbereiches liegen, ermöglicht. Des Weiteren ist es Aufgabe der Erfindung ein Verfahren zur Federung der Fahrzeugkabine mittels einer derartigen Federungsvorrichtung zur Verfügung zu stellen.

Diese Aufgabe wird vorrichtungsseitig durch die Merkmale des Patentanspruches 1 und verfahrensseitig durch die Merkmale des Patentanspruches 7 gelost.

Kerngedanke der Erfindung ist es, eine Federungsvorrichtung für eine Fahrzeugkabine, insbesondere Nutzfahrzeugkabinen von Nutzfahrzeugen mit mindestens einer zwischen der Nutzfahrzeugkabine und einem Grundgestell angeordneter Luftfeder zur Federung der Nutzfahrzeugkabine und einer Steuereinrichtung zum Steuern der Zu- und Abführung mindestens eines Zusatzvolumens zu oder von der Luftfeder zur Verfügung zu stellen, welche bei vorbestimmbaren Geschwindigkeits- oder Beschleunigungswerten einer Federbewegung der Luftfeder mittels der Steuereinrichtung das zu- oder abführbare Zusatzvolumen derart zu- oder abschalten lässt, dass bei vorbestimmbaren Geschwindigkeits- oder Beschleunigungswerten einer Federbewegung der Luftfeder innerhalb eines ersten Geschwindigkeits- oder Beschleunigungswertebereichs mittels der Steuereinrichtung das zu- oder abführbare Zusatzvolumen derart zu- oder abschaltbar ist, dass bei einem ersten Geschwindigkeits- oder Beschleunigungswert das zu- und abführbare schwingungsdämpfende Zusatzvolumen in einem einen jeweiligen Hubendbereich enthaltenden ersten und zweiten Bereich für die Ausstellfederbewegung jeweils geringer als in einem zwischen dem ersten und zweiten Bereich liegenden dritten Bereich der Kraft-Weg-Luftfederkennlinie oder vollständig abgeschaltet und für die ROckstellfederbewegung jeweils größer als in dem dritten Bereich oder vollständig zugeschaltet ist. Auf diese Weise wird in Abhängigkeit von der Schnelligkeit, mit welcher die Luftfeder aufgrund des entspricht und über den beiden vorherigen Werten liegt, wird das Zusatzvolumen in dem ersten und zweiten Bereich für die Ausstellbewegung jeweils größer als in dem dritten Bereich zugeführt oder vollständig zugeschaltet und während der Rückstellfederbewegung vollständig abgeschaltet bzw. mit einem geringeren Anteil als in dem dritten Bereich zugeführt. Auf diese Weise findet in den ersten und zweiten Bereichen während der Auslenkungsbewegung der Feder kein Druckanstieg statt, weshalb die Luftfeder ohne Gegenkraft auseinander- bzw. zusammenfährt. Bei Umkehr der Bewegungsrichtung, also während der Rückstellfederbewegung erfolgt bei einer Auslenkung der Fahrzeugkabine nach oben ein Energieaufbau bzw. eine Progression und bei einer Auslenkung der Fahrzeugkabine nach unten einen Energieentzug bzw. eine Depression. In beiden Fällen wird die Nachschwingung sehr stark hierdurch verringert. Es findet somit eine starke Dämpfung statt.

Auf diese Weise wird in Abhängigkeit von der Schnelligkeit, mit welcher die Luftfeder aufgrund des unebenen Untergrundes, auf welchem sich das Nutzfahrzeug, wie beispielsweise ein Traktor bewegt, ausgelenkt wird, eine Art Untergruriderkennung durchgeführt, die innerhalb der mittels des softwarefunktionierenden Steuereinrichtung einen vorbestimmbaren für den jeweiligen Untergrund vorgesehenen Ablauf des Zu- und Abführens des Zusatzvolumens aufruft. Insbesondere bei mittleren, starken und sehr starken Einleitungen der Luftfeder, also bei einer mittleren, schnellen, und sehr schnellen Veränderung des Federweges der Luftfeder und gegebenenfalls unter Hinzuziehung von Messwerten zu den Amplitudenwerten des Federweges wird das Zusatzvolumen in den Hubendbereichen derart zugeschaltet oder im Vergleich zum Komfortbereich aufrechterhalten, dass die Luftfeder gemäß der Kennlinie des Kraft-Weg-Diagramms entweder während der Auslenkung oder während ihrer Rückstellung oder während beider Bewegungen keine Kraftveränderung erfährt.

Beispielsweise wird bei einem ersten mittleren Geschwindigkeits- oder Beschleunigungswert das zu- und abführbare schwingungsdämpfende Zusatzvolumen in dem ersten und dem zweiten Bereich jeweils geringer als in einem zwischen dem ersten und dem zweiten Bereich liegenden dritten Bereich, welcher den Komfortbereich darstellt, während der Ausstellfederbewegung zugeführt, oder vollständig abgeschaltet, so dass sich hierdurch ein Druckanstieg während der Auslenkung der Luftfeder in den Hubendbereichen ergibt, welcher zu einer Verkürzung des Federweges führt. Anschließend findet während der Rückstellfederbewegung eine Zuschaltung des Zusatzvolumens in Teilen oder vollständig statt, so dass sich hierdurch ein horizontal verlaufender Abschnitt innerhalb der Kraft-Weg-Luftfederkennlinie ergibt. Dies führt zu einer Rückführung der Luftfeder mit einem Zusatzvolumen von einem Wert aus einem Bereich von beispielsweise von 0,1 - 10 I und zu einer verringerten Nachschwingung.

Ab einem zweiten Geschwindigkeits- oder Beschleunigungswert, der einer starken Einleitung entspricht und somit über dem ersten Wert liegt, ist das Zusatzvolumen innerhalb des ersten und des zweiten Bereiches sowohl während der Ausstellfederbewegung als auch während der Rückstellfederbewegung zugeschaltet, woraus sich eine Art neutrale Stellung des gesamten Federungssystemes ergibt. Somit findet in den ersten und zweiten Bereichen, die die Hubendbereiche wiedergeben und außerhalb des Komfortbereiches liegen, kein Druckanstieg statt, unabhängig davon, ob die Luftfeder eine Druck- oder eine Zugbelastung erfährt, also die Fahrzeugkabine nach unten oder nach oben ausgelenkt wird. Somit fährt die Luftfeder in diesem ersten und zweiten Bereich ohne Gegenkraft auseinander und wieder zurück. Eine Nachschwingung wird verringert.

Gemäß dem Gegenstand der Erfindung ist der dritte Bereich innerhalb der Kraft-Weg-Luftfederkennlinie als Komfortbereich der Federungsvorrichtung in Abhängigkeit der von weiteren Geschwindigkeits- oder Beschleunigungswerten, die unterhalb der ersten, zweiten und dritten Geschwindigkeits- oder Beschleunigungswerte liegen, und gegebenenfalls in Abhängigkeit von vorbestimmbaren Amplitudenwerten der Federbewegung unterschiedlich breit ausgebildet. Hierdurch wird aufgrund der gemessenen Geschwindigkeits- oder Beschleunigungswerte und gegebenenfalls der erfassten Auslenkungswege bzw. Amplitudenwerte, woraus sich ermitteln lässt, auf welcher Art von Untergrund sich momentan das Fahrzeug, beispielsweise ein Traktor, befindet, ein diesen Werten zugeordneter Modus innerhalb der Steuereinrichtung aufgerufen, welcher die Grenzen des Komfortbereiches festlegt. Beispielsweise werden bei Befahren einer geteerten Strasse geringe Geschwindigkeitswerte und Auslenkungswege gemessen, woraufhin der Modus "Strasse" aktiviert wird, welcher keinen Komfortbereich vorsieht, da eine ausreichend genaue mittige Kabinenposition ohne größere Auslenkungswege sichergestellt ist. Weitere Moden sind "Übergang Strasse", bei dem ein Übergang von der geteerten Strasse zu einem Feldweg oder andersherum stattfindet und somit ein schmaler Komfortbereich eingerichtet ist, und der Modus "Schlechtweg/Acker etc.", in dem aufgrund der starken Einleitungen, die für größere Auslenkungswege und höhere Geschwindigkeitswerte stehen, ein breiter Komfortbereich vorhanden ist.

Gemäß einer bevorzugten Ausführungsform weist die Federungsvorrichtung mindestens ein pneumatisches Wegeventil zum Zu- oder Abführen des/der Zusatzvolumen auf.

Eine Regeleinrichtung zur selbsttätigen Niveaueinstellung der Kabine zu Anfang eines Benutzungsvorganges durch einen Benutzer mit einem vorbestimmten Gewicht mittels einer Luftzu- oder-abführung zu der Luftfeder derart, dass sich die Luftfeder auf eine mittige Position im dritten Bereich der Kraft-Weg-Luftfederkennlinie einstellt, stellt eine Weiterbildung der Erfindung dar. Die Regeleinrichtung umfasst eine im Bereich der Armlehne eines Fahrzeugsitzes angeordneten Regelschalter.

Der dritte Bereich, also der Komfortbereich, kann innerhalb der Kraft-Weg-Luftfederkennlinie mittels einer Betätigungseinrichtung durch den Benutzer und mittels der Steuereinrichtung derart verschoben werden, dass eine Einstellung der Kabine auf das gewünschte Niveau mit ausreichend schwingungsdämpfenden ersten und zweiten Bereichen stattfindet.

Zusätzlich kann eine Wiedererkennungseinrichtung zum Wiedererkennen eines die Fahrzeugkabine benutzenden Benutzers, insbesondere mittels seines Gewichts, angeordnet sein.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Seitenansicht eines Nutzfahrzeugs mit einer Luftfeder;
- Fig. 2: in einem Diagramm eine schematisch dargestellte Kraft-Weg-Luftfederkennlinie einer Federungsvorrichtung im Modus "Strasse" gemäß einer Ausführungsform der Erfindung;
- Fig. 3: in einem Diagramm eine schematische Darstellung der Kraft-Weg-Luftfederkennlinie der Federungsvorrichtung im Modus "Übergang Strasse";
- Fig. 4: in einem Diagramm eine schematische Darstellung der Kraft-Weg-Luftfederkennlinie der Federungsvorrichtung im Modus "Schlechtweg/Acker etc.";
- Fig. 5: in einem Diagramm in einer schematischen Darstellung die Kraft-Weg-Luftfederkennlinie der Federungsvorrichtung bei mittleren Geschwindigkeiten der Federauslenkung;
- Fig. 6: in einem Diagramm eine schematische Darstellung der Kraft-Weg-Luftfederkennlinie der Federungsvorrichtung bei hohen Geschwindigkeiten der Federauslenkung; und
- Fig. 7: in einem Diagramm eine schematische Darstellung der Kraft-Weg-Luftfederkennlinie der Federungsvorrichtung bei sehr hohen Geschwindigkeiten der Federauslenkung.

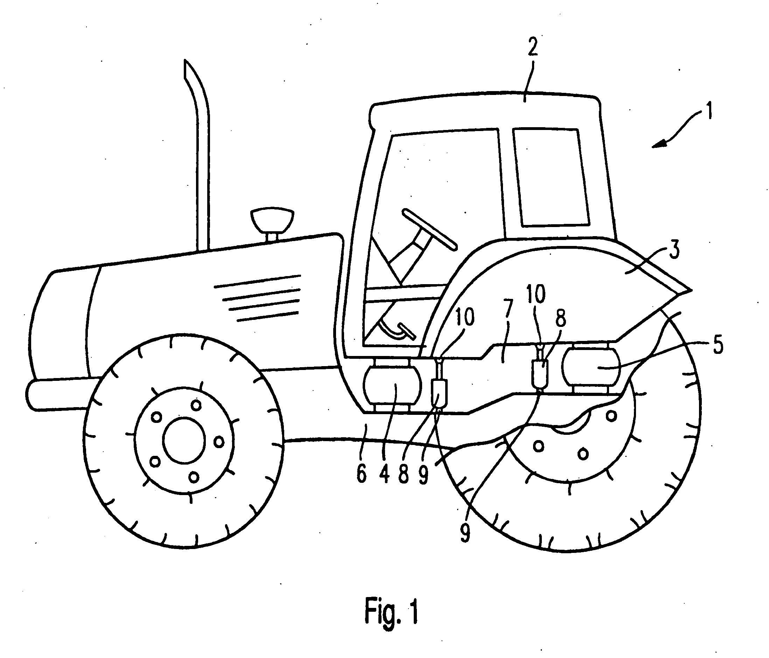

In Fig. 1 wird in einer schematischen Darstellung in Seitenansicht eines Traktors gezeigt. Der Traktor 1 umfasst eine Nutzfahrzeugkabine 2 und den Kotflügel 3.

Zwischen der Nutzfahrzeugkabine 2 und einem Grundgestell bzw. Grundrahmen 6 des Traktors 1 sind zwei dämpfende Lagerungen 4, 5 innerhalb eines Zwischenraumes 7 angeordnet. Zwei Luftfedern 8 sind ebenso im Zwischenraum 7 angeordnet wobei jede Luftfeder 8 mit ihrem unteren Ende 9 mit dem Grundgestell 6 und mit ihrem oberen Ende 10 mit der Nutzfahrzeugkabine 2 verbunden ist. Die Luftfedern können auf Zug und auf Druck beansprucht werden.

Sowohl die dämpfenden Lagerungen 4, 5 als auch die Luftfedern 8 sind derart niveauverstellbar, dass sie bei einer Druckbelastung aufgrund eines Durchfahrens eines Schlagloches durch die Gewichte von Kabine und Fahrer nach unten auslenken und beispielsweise nach Durchfahren eines Schlagloches eine Auslenkung bzw. eine Schwingung nach oben erfahren.

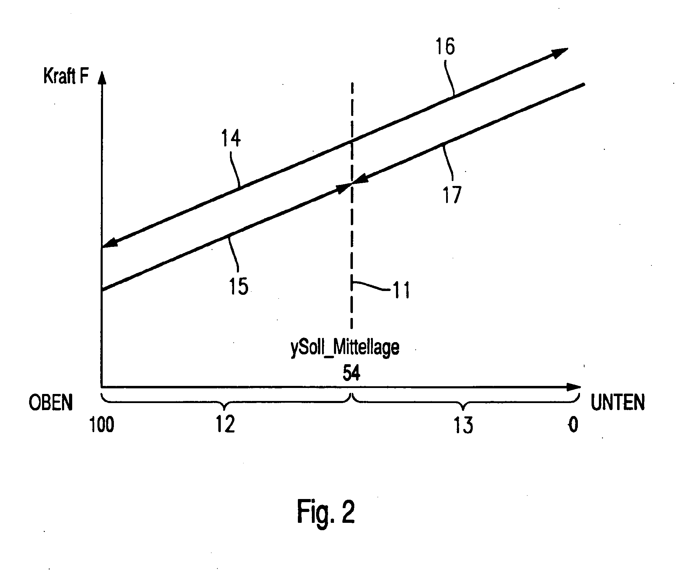

In Fig. 2 wird in einem Kraft-Weg-Luftfederkennlinien-Diagramm der erfindungsgemäßen Federungsvorrichtung der Modus "Strasse" wiedergegeben. Die Abszisse gibt einen Niveauverstellungsweg über 100 mm wieder. In der Mitte des Messbereiches von 100 mm ist die Soll-Mittellage 11 der Fahrzeugkabine hinsichtlich ihrer Höhe eingezeichnet.

In einem ersten Bereich 12 der Luftfederkennlinie wird die Auslenkung der Luftfeder und damit der Kabine 2 nach oben und in einem zweiten Bereich 13 die Auslenkung der Luftfeder und damit der Kabine 2 nach unten dargestellt. Mit den helleren Pfeilen wird eine Ausstellfederbewegung und mit den dunkleren Pfeilen wird eine Rückstellfederbewegung wiedergegeben.

Bei einem gemessenen Geschwindigkeitswert von weniger als 0,114 m/s der Federauslenkung schaltet die Steuereinrichtung automatisch in den Modus "Strasse", in welchem sowohl während der Ausstellfederbewegung als auch während der Rückstellfederbewegung eine Luftfederkennlinie mit der üblichen Steigung ohne Komfortbereich durchlaufen wird. Ein Komfortbereich erübrigt sich aufgrund der stabilen Sitzposition in der Mittellage, die wegen der geringen Unebenheiten einer geteerten Strasse möglich ist.

Sofern die Kabine und damit die Luftfeder eine Auslenkung nach oben erfährt, wird eine Kraftreduzierung durchlaufen, wie es durch den Pfeil 14 dargestellt wird. Während der Rückstellbewegung findet die Kraftzunahme, um eine Rückkehr zur Mittellage zu ermöglichen, statt, wie es durch den Pfeil 15 wiedergegeben wird.

Bei einer Auslenkung der Kabine und der Luftfeder nach unten findet eine Kraftzunahme gemäß dem Pfeil 16 statt, die durch eine Kraftreduzierung während der Rückstellfederbewegung gemäß dem Pfeil 17 wieder verschwindet.

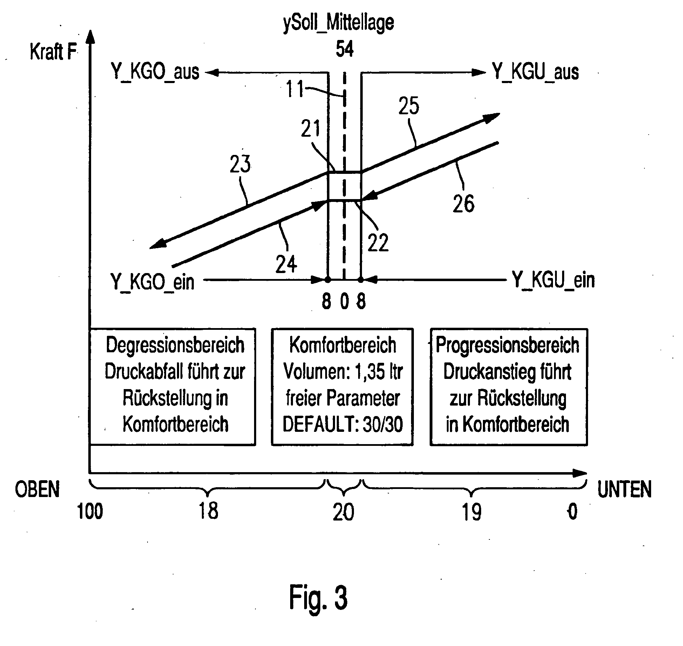

In Fig. 3 wird in einem Diagram die Kraft-Weg-Luftfederkennlinie der Federungsvorrichtung für den Modus "Übergang Strasse" dargestellt. Hierbei findet ein Übergang des Nutzfahrzeuges von der geteerten Strasse auf einen unebenen Weg, wie einen Feldweg, oder andersherum statt.

In einem ersten Bereich 18 und einem zweiten Bereich 19 sind die Luftfeder-Auslenkungen und deren Rückstellung mittels der Pfeile 23, 24 und 25, 26 wiedergegeben. Zusätzlich ist ein dritter Bereich 20 mit den Kennlinien-Abschnitten 21, 22 als schmal ausgeprägter Komfortbereich im Bereich der Mittellage 11 angeordnet, welcher durch eine Zuführung eines Zusatzvolumens von beispielsweise 1,35 I erhalten wird.

In dem einen Degressionsbereich darstellenden ersten Bereich 18 findet ein Druckabfall bei Auslenkung (Bezugszeichen 23) statt, der zu einer Rückstellung in den Komfortbereich 20 führt. In dem einen Progressionsbereich darstellenden zweiten Bereich 19 führt ein Druckanstieg während der Auslenkung 25 zu einer Rückstellung 26 in den Komfortbereich 20.

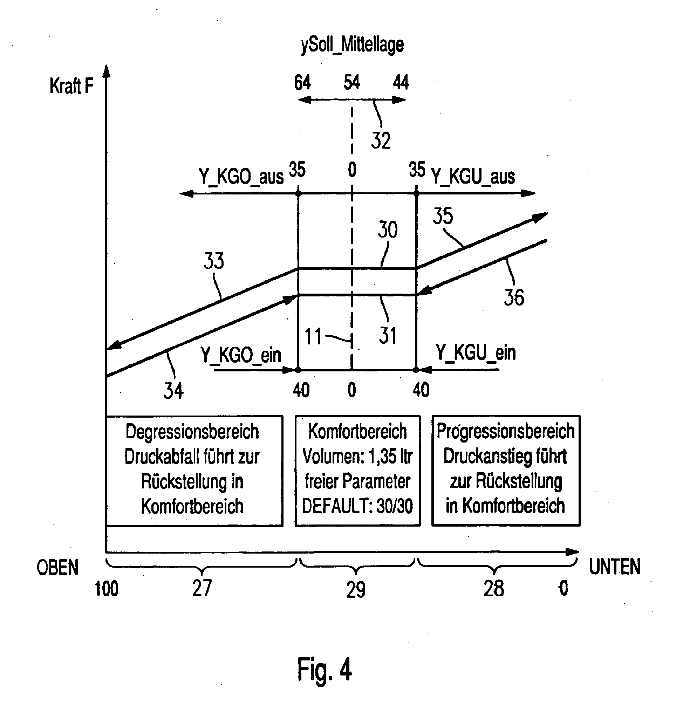

In Fig. 4 wird in einem Diagramm die Kraft-Weg-Luftfederkennlinie einer Federungsvorrichtung im Modus "Schlechtweg/Acker etc." dargestellt. Wiederum verlaufen die in einem ersten und einem zweiten Bereich 27, 28 dargestellten Ausstell- und Rückstellfederbewegungen 33, 34 und 35, 36 entlang der üblichen Steigung der Luftfederkennlinie.

In einem dritten Bereich 29 ist ein breiter Komfortbereich mit den Kennlinien-Abschnitten 30, 31 dargestellt, der aufgrund des unebenen Untergrundes, der überfahren wird, relativ breit zur Schaffung eines maximalen Komforts ausgebildet ist. Dieser Modus stellt sich bei Geschwindigkeiten der Federauslenkung von mehr als 0,114 und weniger als 0,228 m/s ein. Mit dem Bezugszeichen 32 ist schematisch der Abschnitt des Niveauverstellungsweges dargestellt, in welchem die Fahrzeugkabine mit hohem Komfort innerhalb des Komfortbereiches 29 auf- und abschwingen kann.

In dem einen Degressionsbereich darstellenden ersten Bereich 27 führt ein Druckabfall zur Rückstellung in den Komfortbereich, wohingegen in dem einen Progressionsbereich darstellenden zweiten Bereich 28 ein Druckanstieg zur Rückstellung in den Komfortbereich führt.

Eine automatische Erkennung bzw. Unterscheidung der Fahrbahnzustände gemäß den Moden, wie sie in den Figuren 2-4 dargestellt werden, kann wie folgt ablaufen:

Zu Anfang findet eine Gewichtseinstellung nach einer Neubelegung der Fahrzeugkabine durch einen neuen Fahrer und gegebenenfalls zusätzlichen Gegenständen statt. Dies erfolgt automatisch, wobei sich die Federungsvorrichtung auf ein zuvor in einer vorangegangenen Nutzung des Fahrzeuges ermittelten optimierten Mittellage-Niveau einstellt. Ein kurzzeitiges Verlassen der Fahrzeugkabine, beispielsweise über eine Zeitspanne von weniger als 8 sec., bewirkt keine Erkennung einer Unterbrechung der Kabinenbelegung. Somit findet keine Neueinstellung statt. Längere Unterbrechungen, wie sie beispielsweise beim Ankuppeln eines Anhängers erforderlich sind, führen so lange nicht zu einer Neueinstellung, wie sich das Gewicht des Fahrzeugfahrers und der die Kabinen belegenden Gegenstände nach einer erneuten Kabinenbelegung nicht ändert.

Zusätzlich ist eine anfängliche Niveauverstellung der Fahrzeugkabine möglich, wenn keine großen Federauslenkungen vorhanden sind.

Nach der erfolgten Gewichtseinstellung und dem angepassten Niveau stellt sich bei Fahrtbeginn die Federungsvorrichtung automatisch auf den Modus "Übergang Strasse" ein. Je nach Fahrbahnzustand und der daraus resultierenden Einleitungen in die Federungsvorrichtung bzw. der Federauslenkungen wird nach Auswertung von Geschwindigkeits- oder Beschleunigungswerten der Federauslenkung mittels der Steuereinrichtung der Modus "Strasse" oder "Schlechtweg/Acker etc." angewählt. Sofern keine Werte zu dem Modus "Schlechtweg/Acker etc." vorliegen, wird priorisierend der Modus "Strasse" angewählt.

Bei einem Übergang von dem Modus "Schlechtweg/Acker etc." zu dem Modus "Strasse" findet dies über den Modus "Übergang Strasse" über eine Zeitspanne von ca. 10 sec. statt. Bei Verlassen der geteerten Strasse werden aufgrund der erfassten Werte für die Federauslenkung und die Geschwindigkeiten der Federauslenkung Regelparameter der Federungsvorrichtung sofort auf den Modus "Schlechtweg/Acker etc." umgestellt.

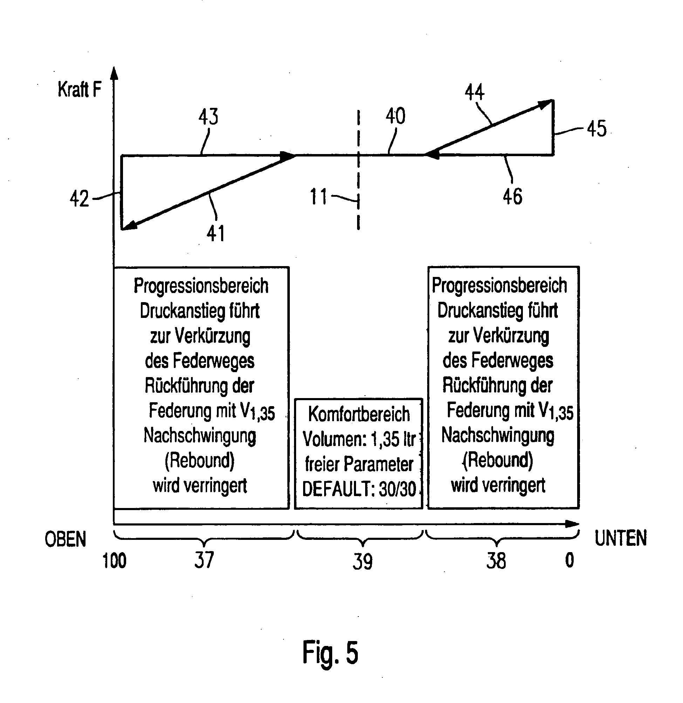

In Fig. 5 wird in einem Diagramm die Kraft-Weg-Luftfederkennlinie der Federungsvorrichtung bei mittleren Geschwindigkeiten der Federauslenkung dargestellt. Die Breite eines dritten Bereiches 39, der den Komfortbereich darstellt, entspricht der Breite des in Fig. 4 dargestellten Komfortbereiches. Dies ist auch anhand eines Kennlinien-Abschnittes 40 erkennbar.

In einem ersten Bereich 37 wird bei einer nach oben ausgerichteten Federauslenkung gemäß dem Bezugszeichen 41 zu Beginn das Zusatzvolumen abgeschaltet, woraus sich in dem hier dargestellten Progressionsbereich ein Druckanstieg ergibt, welcher zu einer Verkürzung des Federweges führt. Anschließend findet bei einer Rückstellfederbewegung während des Überganges von dem Pfeil 41 auf einen Pfeil 42, 43 die Zuschaltung des Zusatzvolumens statt, woraus sich nach der zuvor erfolgten Abbremsung während der Federausstellbewegung 41 eine Kraftzunahme gemäß dem Bezugszeichen 42 bis zum Niveau des horizontal verlaufenden Kennlinienabschnitts 40 ergibt. Anschließend wird die Luftfeder mit dem Zusatzvolumen ohne Steigung der Kennlinie zum Komfortbereich zurückgeführt (vgl. Bezugszeichen 43).

In einem zweiten Bereich 38 wird ebenso während einer Federauslenkung nach unten eine Abbremsung durch anfängliches Abschalten des Zusatzvolumens durchgeführt (Bezugszeichen 44). Anschließend findet eine Zuschaltung des Zusatzvolumens beim Übergang zu der Rückstellfederbewegung 45, 46 statt, wobei sich eine anfängliche Kraftreduzierung bis zum Niveau des horizontal verlaufenden Kennlinienabschnittes 40 ergibt und anschließend gemäß Bezugszeichen 46 eine rückführende Kennlinie ohne Steigung aufgebaut wird. Beidesmal wird eine Nachschwingung verringert.

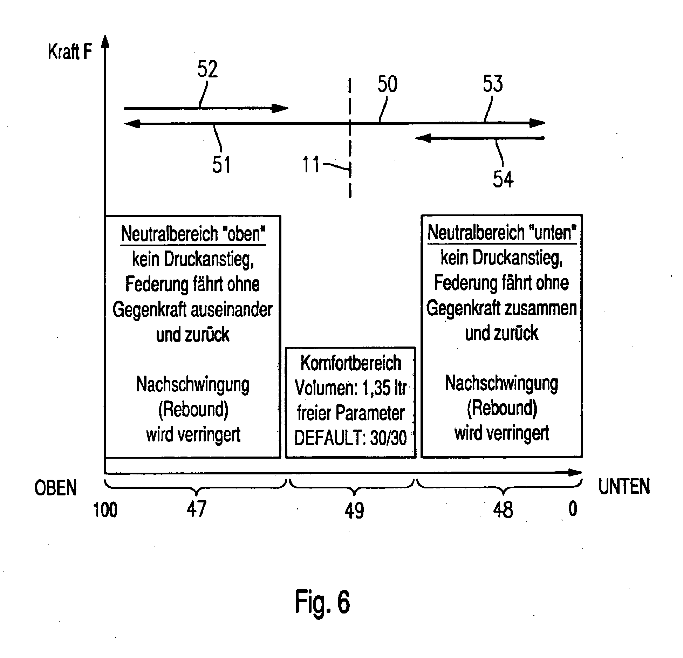

In Fig. 6 wird in einem Diagramm die Kraft-Weg-Luftfederkennlinie der Federungsvorrichtung bei einer hohen Geschwindigkeit von beispielsweise mehr als 0,3185 m/s und weniger als 0,353 m/s der Federauslenkung dargestellt. Bei einer nach oben oder unten ausgerichteten Federauslenkung in diesem Geschwindigkeitsbereich wird in einem ersten und zweiten Bereich 47, 48 der Luftfederkennlinie das Zusatzvolumen bereits zu Anfang der Federauslenkung, also beim Überschreiben der Grenzen eines Komfortbereiches 49 zugeschaltet. Hierdurch ergibt sich eine in Fortsetzung zu einem Kennlinienabschnitt 50 horizontal ohne Steigung verlaufende Kennlinie 51, 52 bzw. 53, 54 während der Ausstell- und Rückstellfederbewegung.

In einem derartigen hinsichtlich des Kennlinienverlaufs neutralen ersten und zweiten Bereich findet kein Druckanstieg während der Auslenkung statt und die Federung fährt ohne Gegenkraft auseinander bzw. zusammen und zurück. Eine Nachschwingung wird weiterhin verringert.

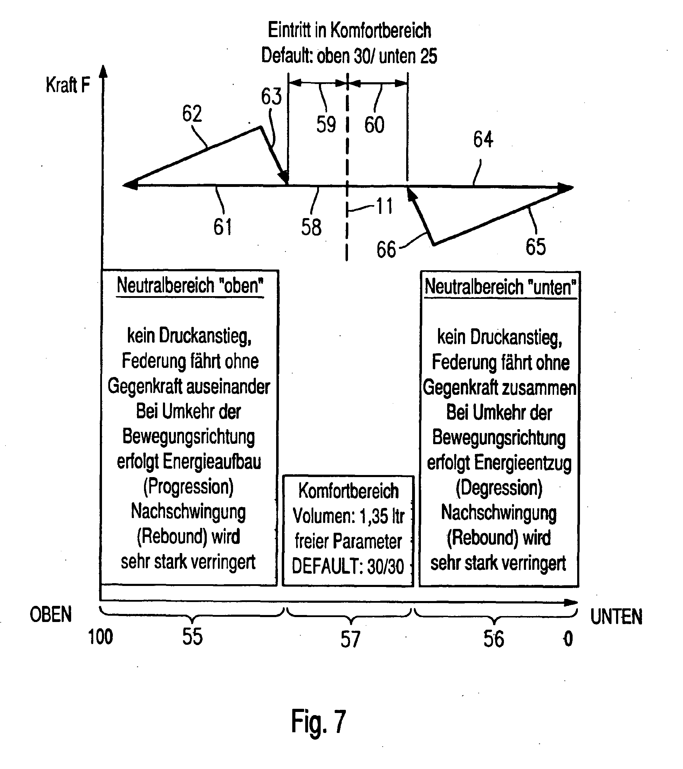

In Fig. 7 wir in einem Diagramm die Kraft-Weg-Luftfederkennlinie der Federungsvorrichtung bei einer Geschwindigkeit von mehr als 0,353 m/s der Federauslenkung dargestellt. In einem ersten Bereich 55 und in einem zweiten Bereich 56 wird wiederum - ähnlich wie bei der in Fig. 6 wiedergegebenen Darstellung - bei einem Übergang aus dem dritten Bereich bzw. dem Komfortbereich 57 das Zusatzvolumen anfänglich zugeschaltet. Hierdurch ergibt sich wiederum eine Fortsetzung der bereits horizontal im Komfortbereich verlaufenden Kennlinie 58, wie es durch Kennlinienabschnitte 61, 64 wiedergegeben wird.

Im Umkehrpunkt von der Ausstellfederbewegung zu der Rückstellfederbewegung, also im Bereich der Pfeilspitze der beiden Pfeile 61, 64, wird das Zusatzvolumen abgeschaltet, woraus sich ein Kraftanstieg, bzw. eine Kraftreduzierung unter gleichzeitigem Zurücklegen eines Wegabschnittes ergibt, wie es durch die Bezugszeichen 62, 65 deutlich wird. Anschließend findet eine starke Kraftreduzierung bzw. ein starker Kraftanstieg gemäß den Bezugszeichen 63, 66 statt. Es ergibt sich demzufolge kein Druckanstieg während der Federauslenkung, wodurch die Luftfeder ohne Gegenkraft im ersten Bereich 55 auseinanderfährt und im zweiten Bereich zusammenfährt. Ab dem Umkehrpunkt der Bewegungsrichtung der Luftfeder erfolgt im ersten Bereich ein Energieaufbau (Progression) und im zweiten Bereich ein Energieentzug (Degression). Die Nachschwingung wird in beiden Fällen sehr stark verringert, woraus sich eine starke Dämpfung ergibt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Traktor
- 2: Fahrzeugkabine
- 3: Kotflügel
- 4: erste dämpfende Lagerung
- 5: zweite dämpfende Lagerung
- 6: Grundrahmen
- 7: Zwischenraum
- 8: Luftfedern
- 9: untere Enden der Luftfedern
- 10: obere Enden der Luftfedern
- 11: Soll-Mittellage
- 12, 18, 27, 37, 47, 55: erster Bereich der Luftfederkennlinie
- 13, 19, 28, 38, 48, 56: zweiter Bereich der Luftfederkennlinie
- 14, 23, 33, 41, 51, 61: nach oben ausgerichtete Ausstellfederbewegung
- 15, 24, 34, 42, 43, 52, 62, 63: zu der nach oben ausgerichteten Ausstellfederbewegung zugehörige Rückstellfederbewegung
- 16, 25, 35, 44, 53, 64: nach unten ausgerichtete Ausstellfederbewegung
- 17, 26, 36, 45, 46, 54, 65, 66: zu der nach unten ausgerichteten Ausstellfederbewegung zugehörige Rückstellfederbewegung
- 20, 29, 39, 49, 57: dritter Bereich der Luftfederkennlinie
- 21, 22, 30, 31, 40, 50, 58: Kennlinienabschnitt im dritten Bereich
- 32: Federauslenkung im Komfortbereich

## Patentansprüche

1. Vorrichtung zur Federung einer Fahrzeugkabine (1), insbesondere Nutzfahrzeugkabine eines Nutzfahrzeugs mit mindestens einer zwischen der Nützfahrzeugkabine (2) und einem Grundgestell (6) angeordneten Luftfeder (8) zur Federung der Nutzfahrzeugkabine (2) und einer Steuereinrichtung zur Steuerung der Zu- und Abführung mindestens eines Zusatzvolumens zu oder von der Luftfeder (8),
**dadurch gekennzeichnet, dass**
bei vorbestimmbaren Geschwindigkeits- oder Beschleunigungswerten einer Federbewegung der Luftfeder (8) innerhalb eines ersten Geschwindigkeits- oder Beschleunigungswertebereichs mittels der Steuereinrichturng das zu- oder abführbare Zusatzvolumen derart zu- oder abschaltbar Ist, dass bei Erreichen eines ersten Geschwindigkeits- oder Beschleurtigurtgswert das zu- und abführbare schwingungsdämpfende Zusatzvolumen in einem einen jeweiligen Hubendbereich enthaltenden ersten und zweiten Bereich (37, 38) für die Ausstellfederbewegung jeweils geringer als in einem zwischen dem ersten und zweiten Bereich (37, 38) liegenden dritten Bereich (39) der Kraft-Weg-Luftfederkennlinie (40-46) oder vollständig abgeschaltet und für die Rückstellfederbewegung jeweils größer als in dem dritten Bereich (39) oder vollständig zugeschaltet ist, wobei der dritte Bereich als Komfortbereich der Federungsvorrichtung ausgebildet ist.

2. Federungsvorrichtung nach Anspruch 1,
**dadurch gekennzeichnet, dass** bei Erreichen eines zweiten Geschwindigkeits- oder Beschleunigungswert das zu- und abführbare schwingungsdämpfende Zusatzvolumen in dem ersten und dem zweiten Bereich (47, 48) der Kraft-Weg-Luflfederkennlinie (50-54) sowohl für die Ausstell- als auch für die Rückstellfederbewegung vollständig zugeschaltet ist, wobei der zweite Geschwindigkeits- oder Beschleunigungswert höher ist als der erste Wert.

3. Federungsvorrichtung nach Anspruch 2,
**dadurch gekennzeichnet, dass**
bei Erreichen eines dritten Geschwindigkeits- oder Beschleunigungswert das zu- und abführbare schwingungsdämpfende Zusatzvolumen in dem ersten und dem zweiten Bereich (55, 56) für die Ausstellfederbewegung jeweils größer als in einem zwischen dem ersten und dem zweiten Bereich (55, 56) liegenden dritten Bereich (57) der Kraft-Weg-Luftfederkennlinie (58, 61-66) oder vollständig zugeschaltet und für die Rückstellfederbewegung jeweils geringer als in dem dritten Bereich (57) oder vollständig abgeschaltet ist, wobei der dritte Geschwindigkeits- oder Beschleunigungswert höher ist als der zweite Wert.

4. Federungsvorrichtung nach einem der Ansprüche 1-3,
**dadurch gekennzeichnet, dass**
der dritte Bereich (39, 49, 57) innerhalb der Kraft-Weg-Luftfederkennlinie (40-46; 50-54; 58, 61-66) als Komfortbereich der Federungsvorrichtung in Abhängigkeit von weiteren Geschwindigkeits- oder Beschteunigungswerten, die unterhalb der ersten, zweiten und dritten Geschwindigkeits- oder Beschleunigungswerte liegen, und in Abhängigkeit von vorbestimmbaren Amplitudenwerten der Federbewegung unterschiedlich breit ausgebildet ist.

5. Federungsvorrichtung nach einem der vorangegangenen Ansprüche,
**gekennzeichnet durch**
eine Regeleinrichtung zur selbsttätigen Niveaueinstellung der Nutzfahrzeugkabine zu Anfang eines Benutzungsvorganges **durch** einen Benutzer mit einem vorbestimmten Gewicht mittels einer Luftzu- oder-abführung zu der Luftfeder (8) derart, dass sich die Luftfeder (8) auf eine mittige Position (11) im dritten Bereich (39; 49; 57) der Kraft-Weg-Luftfederkennlinie (40-46: 50-54; 58, 61-66) einstellt

6. Federungsvorrichtung nach Anspruch 5,
**dadurch gekennzeichnet, dass**
die erste Regeleinrichtung einen im Bereich der Armlehne eines Fahrzeugsitzes angeordneten Regelschalter umfasst.

7. Federungsvorrichtung nach einem der vorangegangenen Ansprüche,
**dadurch gekennzeichnet, dass**
der dritte Bereich (39; 49; 57) innerhalb der Kraft-Weg-Luftfederkennlinie (40-46; 50-54; 58, 61-66) mittels einer Betätigungseinrichtung durch den Benutzer und mittels der Steuereinrichtung derart verschoben werden kann, dass eine Einstellung der Kabine auf das gewünschte Niveau mit ausreichend schwingungsdämpfenden ersten und zweiten Bereichen (37, 38; 47, 48; 55, 56) stattfindet.

8. Verfahren zur Federung einer Fahrzeugkabine, insbesondere Nutzfahrzeugkabine eines Nutzfahrzeuges mit mindestens einer zwischen der Nutzfahrzeugkabine (2) und einem Grundgestell (6) angeordnete Luftfeder (8) zur Federung der Nutzfahrzeugkabine (2) und einer Steuereinrichtung zur Steuerung der Zu- und Abführung mindestens eines Zusatzvolumens zu oder von der Luftfeder (8),
**dadurch gekennzeichnet, dass**
das zu- oder abführbare Zusatzvolumen mittels der Steuereinrichtung verändert, abgeschaltet oder zugeschaltet wird, wenn die Luftfeder (8) in ihrer Federbewegung vorbestimmte Geschwindigkeits- oder Beschleunigungswerte überschreitet, um eine Steigung bzw. ein Gefälle des Verlaufs einer Kraft-Weg-Luftfederkennlinie für Hubendbereiche der Luftfeder bei einer Ausstell- oder/und Ruckstellfederwegung in einem einen jeweiligen Hubendbereich enthaltenden ersten und zweiten Bereich (37, 38; 47, 48; 55, 56) zu vermeiden, und dass das Zusatsvolumen bei Erreichen eines ersten Geschwindigkeits- oder Beschleunigungswert in dem ersten und den zweiten Bereich während der Ausstellfederbewegung abgeschaltet und während der Rückstellfederbewegung zugeschaltet wird, wobei Erreichen ein zwischen dem ersten und zweiten Bereich liegenden dritter Bereich (39, 9, 57) als Komfortbereich der Federungsvorrichtung ausgebildet ist.

9. Verfahren nach Anspruch 8,
**dadurch gekennzeichnet, dass**
das Zusatzvolumen bei Erreichen eines zweiten Geschwindigkeits- oder Beschleunigungswert während der Ausstellfederbewegung in dem ersten und in dem zweiten Bereich zugeschaltet wird oder zugeschaltet bleibt und während der Rückstellfederbewegung zugeschaltet bleibt, wobei der zweite Geschwindigkeits- oder Beschleunigungswert höher ist als der erste Wert.

10. Verfahren nach Anspruch 8,
**dadurch gekennzeichnet, dass**
das Zusatzvolumen bei Erreichen eines dritten Geschwindigkeits- oder Beschleunigungswert während der Ausstellfederbewegung in dem ersten und in dem zweiten Bereich zugeschaltet wird oder zugeschaltet bleibt und während der Rückstellfederbewegung abgeschaltet wird, wobei der dritte Geschwindigkeits- oder Beschleunigungswert höher ist als der erste Wert.

## Claims

1. Device for suspending a vehicle cabin (1), in particular a utility vehicle cabin of a utility vehicle, comprising at least one air spring (8) for suspension of the utility vehicle cabin (2), said air spring being arranged between the utility vehicle cabin (2) and a base frame (6), and a control device for controlling the supply and discharge of at least one additional volume to or from the air spring (8), **characterized in that**, at predefinable speed or acceleration values of a spring movement of the air spring (8) within a range of first speed or acceleration values the additional volume which can be supplied or discharged can be switched on or off by means of the control device in such a way that,
by reaching a first speed or acceleration value, the vibration-damping additional volume which can be supplied and discharged in a first and second range (37, 38) for the extension spring movement is in each case smaller than in a third range (39) of the force/travel air spring characteristic (40-46) which lies between the first and second range (40-46), or is fully switched off, and for the return spring movement is in each case greater than in the third range (39) or is fully switched on, each the first and second range comprise an end-of-travel region, wherein the third range is designed as the comfort range of the device for suspending.

2. Suspension device according to Claim 1, **characterized in that**, by reaching a second speed or acceleration value, the vibration-damping additional volume which can be supplied and discharged in the first and second range (47, 48) of the force/travel air spring characteristic (50-54) is fully switched on both for the extension spring movement and for the return spring movement, wherein the second speed or acceleration value is greater than the first value.

3. Suspension device according to Claim 2, **characterized in that**, by reaching a third speed or acceleration value, the vibration-damping additional volume which can be supplied and discharged in the first and second range (55, 56) for the extension spring movement is in each case greater than in a third range (57) of the force/travel air spring characteristic (58, 61-66) which lies between the first and second range (55, 56), or is fully switched on, and for the return spring movement is in each case smaller than in the third range (57) or is fully switched off, wherein the third speed or acceleration value is greater than the second value.

4. Suspension device according to any of Claims 1-3, **characterized in that** the third range (39, 49, 57) within the force/travel air spring characteristic (40-46; 50-54; 58, 61-66), as the comfort range of the suspension device, is designed to have a variable width depending on further speed or acceleration values, which lie below the first, second and third speed or acceleration values, and depending on predefinable amplitude values of the spring movement.

5. Suspension device according to any of the preceding claims, **characterized by** an adjustment device for automatic adjustment of the level of the utility vehicle cabin at the start of a use operation by a user having a predefined weight by means of air being supplied to or discharged from the air spring (8) in such a way that the air spring (8) adjusts to a central position (11) in the third range (39; 49; 57) of the force/travel air spring characteristic (40-46; 50-54; 58, 61-66).

6. Suspension device according to Claim 5, **characterized in that** the first adjustment device comprises a regulator switch which is arranged in the region of the armrest of a vehicle seat.

7. Suspension device according to any of the preceding claims, **characterized in that** the third range (39; 49; 57) can be displaced within the force/travel air spring characteristic (40-46; 50-54; 58, 61-66) by means of an operating device by the user and by means of the control device in such a way that the cabin is adjusted to the desired level with sufficiently vibration-damping first and second ranges (37, 38; 47, 48; 55, 56).

8. Method for suspension of a vehicle cabin, in particular a utility vehicle cabin of a utility vehicle, comprising at least one air spring (8) for suspension of the utility vehicle cabin (2), said air spring being arranged between the utility vehicle cabin (2) and a base frame (6), and a control device for controlling the supply and discharge of at least one additional volume to or from the air spring (8), **characterized in that** the additional volume which can be supplied or discharged is changed, switched off or switched on by means of the control device when the air spring (8) exceeds predefined speed or acceleration values in its spring movement, in order to prevent any incline or drop in the profile of a force/travel air spring characteristic for end-of-travel regions of the air spring during an extension and/or return spring movement in first and second ranges (37, 38; 47, 48; 55, 56), each the first an second range comprise an end-of-travel region and by reaching a first speed or acceleration value in the first and second range, the additional volume is switched off during the extension spring movement and switched on during the return spring movement, wherein a third range (39, 9, 57) lies between the first an second range and is designed as the comfort range of the device for suspending.

9. Method according to Claim 8, **characterized in that,** by reaching a second speed or acceleration value, the additional volume is switched on or remains switched on during the extension spring movement in the first and second range and remains switched on during the return spring movement, wherein the second speed or acceleration value is greater than the first value.

10. Method according to Claim 8, **characterized in that,** by reaching a third speed or acceleration value, the additional volume is switched on or remains switched on during the extension spring movement in the first and second range and is switched off during the return spring movement, wherein the third speed or acceleration value is greater than the first value.

## Revendications

1. Dispositif de suspension élastique d'une cabine de véhicule (1), en particulier d'une cabine de véhicule utilitaire, comprenant au moins un ressort pneumatique (8) agencé entre la cabine de véhicule utilitaire (2) et un châssis de base (6) pour la suspension élastique de la cabine de véhicule utilitaire (2) et un dispositif de commande pour commander l'acheminement d'au moins un volume complémentaire dans le ressort pneumatique (8) ou son évacuation de celui-ci,
**caractérisé en ce que,**
à des valeurs de vitesse ou d'accélération prédéterminables d'un mouvement élastique du ressort pneumatique (8) dans une première plage de valeurs de vitesse ou d'accélération, le volume complémentaire acheminable ou évacuable peut être mis en ou hors circuit au moyen du dispositif de commande de sorte que, lorsqu'une première valeur de vitesse ou d'accélération est atteinte, le volume complémentaire acheminable et évacuable amortissant les vibrations soit pour le mouvement élastique d'extension mis hors circuit respectivement plus faiblement dans une première et une deuxième zone (37, 38) contenant une zone de fin de course respective que dans une troisième zone (39), située entre les première et deuxième zones (37, 38), de la caractéristique de force-course (40 à 46) du ressort pneumatique ou soit complètement mis en circuit et soit, pour le mouvement élastique de rappel, mis en circuit respectivement plus fortement que dans la troisième zone (39) ou soit complètement mis en circuit, la troisième zone se présentant sous la forme d'une zone de confort du dispositif de suspension.

2. Dispositif de suspension élastique selon la revendication 1,
**caractérisé en ce que,**
lorsqu'une deuxième valeur de vitesse ou d'accélération est atteinte, le volume complémentaire acheminable et évacuable amortissant les vibrations est complètement mis en circuit dans les première et deuxième zones (47, 48) de la caractéristique force-course (50 à 54) du ressort pneumatique tant pour le mouvement élastique d'extension que pour le mouvement élastique de rappel, la deuxième valeur de vitesse ou d'accélération étant supérieure à la première valeur.

3. Dispositif de suspension selon la revendication 2,
**caractérisé en ce que,**
lorsqu'une troisième valeur de vitesse ou d'accélération est atteinte, le volume complémentaire acheminable etévacuable amortissant les vibrations est mis en circuit respectivement plus fortement dans les première et deuxième zones (55, 56) pour le mouvement élastique d'extension que dans une troisième zone (57) située entre les première et deuxième zones (55, 56) de la caractéristique force-course (58, 61 à 66) du ressort pneumatique ou est complètement mis en circuit et est, pour le mouvement élastique de rappel, mis hors circuit respectivement plus faiblement que dans la troisième zone (57) ou est complètement mis hors circuit, la troisième valeur de vitesse ou d'accélération étant supérieure à la deuxième valeur.

4. Dispositif de suspension selon l'une quelconque des revendications 1 à 3,
**caractérisé en ce que**
la troisième zone (39, 49, 57) de la caractéristique force-course (40 à 46 ; 50 à 54 ; 58, 61 à 66) du ressort pneumatique présente une largeur différente en fonction d'autres valeurs de vitesse ou d'accélération, qui se situent en dessous des première, deuxième et troisième valeurs de vitesse ou d'accélération, et en fonction de valeurs d'amplitude prédéterminables du mouvement élastique pour constituer une zone de confort du dispositif de suspension.

5. Dispositif de suspension élastique selon l'une quelconque des revendications précédentes,
**caractérisé par**
un dispositif de réglage destiné au réglage de niveau automatique de la cabine de véhicule utilitaire au début d'une opération d'utilisation par un utilisateur d'un poids prédéterminé au moyen de l'acheminement d'air au ressort pneumatique (8) ou l'évacuation d'air de celui-ci de telle sorte que le ressort pneumatique (8) se règle sur une position centrale (11) dans la troisième zone (39 ; 49 ; 57) de la caractéristique force-course (40 à 46 ; 50 à 54 ; 58, 61 à 66) du ressort pneumatique.

6. Dispositif de suspension selon la revendication 5,
**caractérisé en ce que**
le premier dispositif de réglage comprend un commutateur de réglage agencé dans la zone de l'accoudoir d'un siège de véhicule.

7. Dispositif de suspension élastique selon l'une quelconque des revendications précédentes,
**caractérisé en ce que**
la troisième zone (39 ; 49 ; 57) de la caractéristique force-course (40 à 46 ; 50 à 54 ; 58, 61 à 66) du ressort pneumatique peut être déplacée au moyen d'un dispositif d'actionnement par l'utilisateur et au moyen du dispositif de commande de manière à assurer un réglage de la cabine au niveau souhaité avec des première et deuxième zones (37, 38 ; 47, 48 ; 55, 56) amortissant suffisamment les vibrations.

8. Procédé de suspension élastique d'une cabine de véhicule, en particulier d'une cabine de véhicule utilitaire, comprenant au moins un ressort pneumatique (8) agencé entre la cabine de véhicule utilitaire (2) et un châssis de base (6) pour placer en suspension élastique la cabine de véhicule utilitaire (2) et un dispositif de commande pour commander l'acheminement d'au moins un volume complémentaire dans le ressort pneumatique (8) et son évacuation de celui-ci,
**caractérisé en ce que**
le volume complémentaire acheminable ou évacuable est modifié, mis hors circuit ou mis en circuit au moyen du dispositif de commande, si le ressort pneumatique (8) dépasse dans son mouvement élastique des valeurs de vitesse ou d'accélération prédéterminées pour éviter une pente ascendante ou une pente descendante du tracé d'une caractéristique force-course du ressort pneumatique pour des zones de fin de course du ressort pneumatique lors d'un mouvement élastique d'extension et/ou de rappel dans une première et une deuxième zone (37, 38 ; 47, 48 ; 55, 56) contenant une zone de fin de course respective, et **en ce que** le volume complémentaire, lorsqu'une première valeur de vitesse ou d'accélération est atteinte, est mis hors circuit dans la première et la deuxième zone pendant le mouvement élastique d'extension et mis en circuit pendant le mouvement élastique de rappel, une troisième zone (39, 9, 57) située entre les première et deuxième zones se présentant comme une zone de confort du dispositif de suspension élastique.

9. Procédé selon la revendication 8,
**caractérisé en ce que**
le volume complémentaire, lorsqu'une deuxième valeur de vitesse ou d'accélération est atteinte, est mis en circuit ou reste en circuit pendant le mouvement élastique d'extension dans les première et deuxième zones et reste mis en circuit pendant le mouvement élastique de rappel, la deuxième valeur de vitesse ou d'accélération étant supérieure à la première valeur.

10. Procédé selon la revendication 8,
**caractérisé en ce que**
le volume complémentaire, lorsqu'une troisième valeur de vitesse ou d'accélération est atteinte, est mis en circuit ou reste en circuit pendant le mouvement élastique d'extension dans les première et deuxième zones et est mis hors circuit pendant le mouvement élastique de rappel, la troisième valeur de vitesse ou d'accélération étant supérieure à la première valeur.
